# EUROPÄISCHE PATENTSCHRIFT

(11) **EP 0 474 657 B1**
(45) Veröffentlichungstag und Bekanntmachung des Hinweises auf die Patenterteilung: **08.09.1993**
(21) Anmeldenummer: 90907028.6
(22) Anmeldetag: 17.05.1990
(51) Int. Cl.: F16L 37/08

(54) **SCHLAUCHSTECKKUPPLUNG**
PLUG-IN COUPLING FOR HOSES
ACCOUPLEMENT POUR TUYAUX FLEXIBLES

(30) Priorität: 02.06.1989 DE 3918021
(43) Veröffentlichungstag der Anmeldung: 18.03.1992
(73) Patentinhaber: Alfred Kärcher GmbH & Co., 71364 Winnenden (DE)
(72) Erfinder: SCHWADERER, Christian, D-7057 Leutenbach 3 (DE); LANGER, Peter, D-7052 Schwaikheim (DE)
(74) Vertreter: Hoeger, Stellrecht & Partner
(86) Internationale Anmeldenummer: EP9000792
(87) Internationale Veröffentlichungsnummer: WO9015281

(56) Entgegenhaltungen:
- EP-A- 240 452
- WO-A-85/05418
- CH-A- 667 506
- DE-A- 3 428 597
- US-A- 3 588 149
- US-A- 4 561 682

## Beschreibung

Die Erfindung betrifft eine Schlauchsteckkupplung mit einer Hülse, in die abgedichtet ein Schlauchnippel einschiebbar ist, mit einem an der Hülse senkrecht zu deren Längsachse verschiebbar gehaltenen, U-förmigen, elastisch verformbaren Verriegelungselement, welches mit seinen zwei Armen einen Vorsprung am Schlauchnippel hintergreift und dadurch dessen Herausziehen verhindert, und mit an der Hülse angeordneten Keilflächen, an denen die zwei Arme des Verriegelungselementes anliegen und durch die die beiden Arme bei einer durch Drücken auf deren Verbindungsbereich hervorgerufenen Verschiebung des Verriegelungselementes elastisch so weit voneinander entfernt werden, daß der Schlauchnippel freigegeben wird.

Eine solche Schlauchsteckkupplung ist aus der DE-OS 34 40 753 bekannt. Das Verriegelungselement ist dabei als schmaler Bügel ausgebildet, der durch eine sich über einen Teil des Umfangs der Hülse erstreckende Nut mit seinem Steg hindurchtritt. Durch diese Ausgestaltung ergibt sich für den Benutzer eine nur kleine Andruckfläche zum Verschieben dieses Verriegelungselementes, so daß die Bedienung erschwert ist. Außerdem muß der Steg des bügelförmigen Verriegelungselementes über die Außenumfangsfläche der Hülse hervorstehen, so daß sich nicht nur scharfe Kanten ausbilden, sondern daß auch relativ zueinander bewegliche Teile offenliegen, die gegebenenfalls unbeabsichtigt betätigt werden können.

Es ist Aufgabe der Erfindung, eine gattungsgemäße Steckkupplung so weiterzuentwickeln, daß diese Nachteile vermieden werden und eine vereinfachte Bedienung möglich ist.

Diese Aufgabe wird bei einer Schlauchsteckkupplung der eingangs beschriebenen Art erfindungsgemäß dadurch gelöst, daß das Verriegelungselement durch ein U-förmiges Gehäuse mit einer oberen Wand und zwei Seitenwänden gebildet ist, welches die Hülse im wesentlichen über deren gesamte Länge umgibt, daß die Arme an die Seitenwände angeformte Vorsprünge sind und daß die obere Wand des Gehäuses als Druckfläche ausgebildet ist.

Bei dieser Ausgestaltung wird die Hülse also noch einmal von einem Gehäuse umgeben, welches im wesentlichen glatte Außenflächen aufweist, so daß keine scharfen Kanten oder gegeneinander bewegbare Teile auf der Außenseite angeordnet sind. Außerdem kann die gesamte obere Wand des Gehäuses als Druckfläche verwendet werden, so daß der Benutzer der Kupplung ein Lösen der ineinandergesteckten Teile in einfacher Weise durch einen Druck auf die obere Wand des Gehäuses erreichen kann. Dadurch wird die Bedienung wesentlich vereinfacht, ein Suchen nach der geeigneten Druckfläche ist nicht mehr notwendig.

Besonders vorteilhaft ist es, wenn die Arme des Gehäuses in seitliche Schlitze der Hülse eingreifen und das Gehäuse dadurch an der Hülse in Längsrichtung unverschieblich, dagegen quer dazu verschieblich lagern. Das Gehäuse wird allein durch dieses Eingreifen der Arme in die Schlitze an der Hülse gehalten, wobei neben der Festlegung in axialer Richtung auch eine Sicherung gegen ein Verkippen des Gehäuses relativ zur Längsachse der Hülse sichergestellt wird. Die in die Arme eingreifenden Schlitze bilden also eine Gleitführung für das Gehäuse, durch welche das Gehäuse nur in einer Ebene senkrecht zur Längsachse der Hülse verschiebbar ist.

Es kann dabei insbesondere vorgesehen sein, daß die Arme so weit elastisch aufbiegbar sind, daß sie aus den Schlitzen der Hülse austreten. Durch das Aufbiegen der Arme läßt sich somit das Gehäuse von der Hülse wieder trennen, beziehungsweise können Gehäuse und Hülse umgekehrt einfach dadurch montiert werden, daß das Gehäuse elastisch auf die Hülse aufgeschoben wird, wobei dann die Arme aufgrund der Eigenelastizität in die Schlitze einrasten.

Besonders günstig ist es, wenn die Vorsprünge nach innen vorstehende, streifenförmige Wandbereiche sind. Diese können insbesondere als Teile einer Stirnwand ausgebildet sein.

Auch auf der gegenüberliegenden Seite kann das Gehäuse mittels einer Stirnfläche verschlossen sein, welche koaxial zur Längsachse der Hülse eine Durchstecköffnung für einen Schlauchanschluß aufweist. Auf diese Weise erfährt das Gehäuse bei eingesetztem Schlauchanschluß eine zusätzliche Abstützung, da es den Schlauchanschluß ringförmig umgibt. Dadurch wird eine Verschiebung des Gehäuses relativ zur Hülse nicht behindert, da die Verschiebewege des Gehäuses gegenüber der Hülse außerordentlich gering sind und da die gegenüberliegende, den Schlauchanschluß umgebende Stirnwand wie eine Scharnierlagerung für das Gehäuse wirkt.

Bei einem bevorzugten Ausführungsbeispiel ist in der Hülse ein federbelastetes Rückschlagventil angeordnet, das entgegen der Federkraft durch den eingeschobenen Schlauchnippel in Offenstellung verschiebbar ist. Bei herausgezogenem Schlauchnippel ist somit die Steckkupplung verschlossen.

In die Hülse können beidseitig abgedichtete Schlauchnippel einschiebbar sein.

Dabei kann vorgesehen sein, daß ein Schlauchnippel mittels der elastisch aufbiegbaren Arme des Gehäuses, der andere mittels einer elastischen Rast- oder Schnappverbindung in der Hülse in axialer Richtung unverschieblich festgelegt ist.

Bei einer anderen Anordnung ist es jedoch auch möglich, daß das Gehäuse beidendig aufbiegbare Arme trägt, wobei jeweils ein Armpaar jedem der Schlauchnippel zugeordnet ist.

Die nachfolgende Beschreibung bevorzugter Ausführungsformen der Erfindung dient im Zusammenhang mit der Zeichnung der näheren Erläuterung. Es zeigen:
- Figur 1:: eine Längsschnittansicht durch ein bevorzugtes Ausführungsbeispiel einer Steckkupplung mit eingesteckten Schlauchnippeln;
- Figur 2:: eine Ansicht in Richtung des Pfeiles A in Figur 1 in teilweise aufgebrochener Darstellung mit den Armen in Schließstellung und
- Figur 3:: eine Ansicht ähnlich Figur 2 mit den Armen in Freigabestellung.

Die in der Zeichnung dargestellte Schlauchsteckkupplung umfaßt eine Hülse 1 mit einer durchgehenden Innenbohrung 2, die sich zur Mitte hin stufenförmig verengt.

An einem Ende 3 bildet diese Innenbohrung 2 eine zylindrische Einstecköffnung 4 für einen Schlauchnippel 5, der mit einer Dichtfläche 6 an der Innenwand der Einstecköffnung 4 anliegt. Zur Abdichtung ist in eine Umfangsnut 7 der Dichtfläche 6 eine Ringdichtung 8 eingelegt. Die Dichtfläche 6 zeigt außerdem umfangseitige Rippen 9, die beim Einschieben des Schlauchnippels 5 elastisch in entsprechende Umfangsnuten 10 in der Innenwand der Einstecköffnung 4 einrasten. Dadurch wird der Schlauchnippel 5 nach dem Einstecken in axialer Richtung festgelegt, er kann jedoch mit entsprechend großer axialer Kraft wieder aus der Hülse 1 herausgezogen werden, wobei die Rippen 9 durch elastische Verformung aus der Umfangsnut 10 austreten.

Die Einstecköffnung 4 wird durch eine nach innen vorspringende Stufe 11 bodenseitig begrenzt. In der in diesem Bereich einen entsprechend geringeren Durchmesser aufweisenden Innenbohrung 2 ist der Schaft 12 eines Ventilkörpers 13 längsverschieblich gelagert, der an einem Ende in einer Umfangsnut 14 eine Ringdichtung 15 und am anderen Ende eine nach außen über den Schaft 12 vorstehende Ringfläche 16 trägt, die an ihrem Außenrand an der Innenwand der in diesem Bereich erweiterten Innenbohrung 2 anliegt. An der Ringfläche 16 stützt sich eine den Schaft 12 umgebende Schraubenfeder 17 ab, deren anderes Ende an einem radialen Vorsprung 18 der Innenbohrung 2 anliegt und die den Ventilkörper 13 von der Einstecköffnung 4 zu entfernen sucht. Unter dem Einfluß dieser Schraubenfeder 17 wird der Ventilkörper 13 soweit verschoben, bis die Ringdichtung 15 an einem als Ventilsitz ausgebildeten, konischen Rand 19 der aus der Einstecköffnung 4 austretenden Innenbohrung 2 anliegt. Dadurch wird der Durchgang durch die Innenbohrung verschlossen.

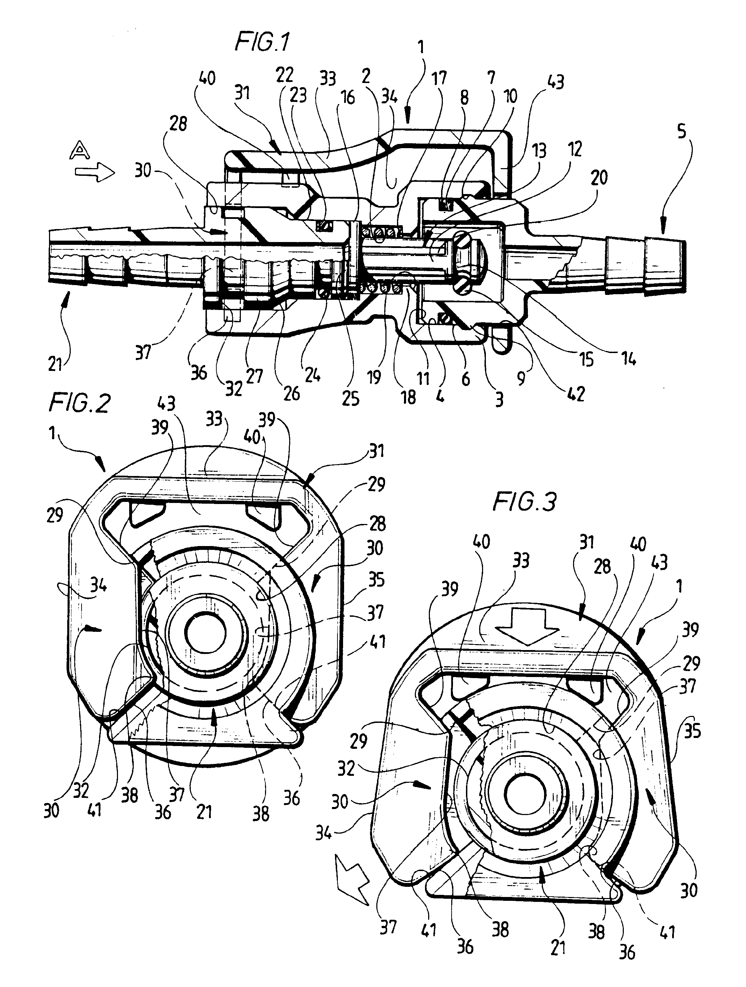

Verschiebt man den Ventilkörper 13 entgegen der Wirkung der Schraubenfeder 17, so wird die Ringdichtung 15 von dem Rand 19 abgehoben, so daß ein Strömungsdurchgang durch die Innenbohrung 2 ermöglicht wird. Zu diesem Zweck ist der Schaft 12 hohl ausgebildet, an dem die Ringfläche 16 tragenden Ende ist er an der Stirnfläche offen, der Innenraum des Schaftes 12 steht durch Durchbrüche 20 im Mantel mit dem Außenraum in Verbindung. Der Ventilkörper ist in Figur 1 in Durchgangsstellung dargestellt.

In die Innenbohrung 2 ist von der der Einstecköffnung 4 abgewandten Seite her ein weiterer Schlauchnippel 21 einschiebbar, der in einer zylindrischen Dichtfläche 22 in einer Umfangsnut 23 eine Ringdichtung 24 trägt. Diese Ringdichtung legt sich dichtend an die Innenwand der Innenbohrung 2 an, die Stirnkante 25 des Schlauchnippels 21 liegt an der Ringfläche 16 des Ventilkörpers 13 an und schiebt diesen in die in Figur 1 dargestellte Durchgangsstellung.

An die Dichtfläche 22 des Schlauchnippels 21 schließt sich auf der der Stirnkante 25 abgewandten Seite eine sich konisch erweiternde Aufgleitfläche 26 an, die in einer zylindrischen Führungsfläche 27 endet; diese liegt bei eingeschobenem Schlauchnippel flächig an dem erweiterten Einführbereich 28 der Innenbohrung 2 an.

Die Hülse 1 weist im Einführbereich 28 zwei sich über einen Teil des Hülsenumfanges erstreckende Schlitze 29 auf, die die Innenbohrung 2 mit dem Außenraum verbinden. In diese Schlitze 29 greifen von außen her zwei Arme 30 eines Gehäuses 31 hindurch, die nach innen in den Einführbereich 28 vorstehen und dort in eine Umfangsnut 32 in der Führungsfläche 27 des Schlauchnippels 21 eintauchen und diesen dadurch in axialer Richtung festlegen.

Das Gehäuse 31 ist im Querschnitt U-förmig ausgebildet und weist eine obere Wand 33 sowie zwei sich daran anschliessende, senkrecht nach unten abstehende Seitenwinde 34 und 35 auf. Es erstreckt sich über die gesamte Länge der Hülse 1 und umgibt diese auf drei Seiten, während die Unterseite der Hülse 1 offenliegt. Die Arme 30 sind an die vordere Kante der beiden Seitenwände 34 und 35 angeformte, senkrecht nach innen abstehende, streifenförmige Wandteile, die am unteren Ende in nach innen ansteigenden, schrägen Aufgleitkanten 36 enden. An den Innenkanten 37 der beiden Arme, die im wesentlichen parallel zu den Seitenwänden 34 verlaufen, sind im Übergangsbereich zu den Aufgleitkanten 36 nach innen ragende Vorsprünge 38 angeformt, wobei der Abstand dieser Vorsprünge 38 an den beiden Armen 30 bei unverformten Armen geringer ist als der Außendurchmesser des Schlauchnippels 21 im Bereich der Umfangsnut 32.

An der Oberseite enden die Arme 30 mit einer schräg nach außen ansteigenden Kante 39.

Die beiden Schlitze 29 in der Hülse 1 sind so angeordnet, daß ihr umfangsseitiger Abstand zum oberen Ende der Hülse größer ist als der Abstand der Vorsprünge 38 der beiden Arme 30, solange die Arme 30 unverformt sind. Zum Einschieben der Arme 30 in die Schlitze 29 ist es daher notwendig, die Arme 30 elastisch voneinander zu entfernen. Dies ist möglich, weil das Gehäuse 31 aus einem elastischen Werkstoff ausgebildet ist, insbesondere aus einem elastischen Kunststoff. An dem die Arme 30 tragenden Ende ist das Gehäuse 31 nicht mit einer Stirnwand versehen, die Arme 30 sind ausschließlich an den Seitenwänden 34 und 35 angeformt. Dadurch ist ein elastisches Aufbiegen der Seitenwände an diesem Ende ohne weiteres möglich. Durch ein solches Aufbiegen ist es möglich, die Arme 30 in die Schlitze 29 eintreten zu lassen, wobei sowohl die Aufgleitkanten 36 als auch die oberen Kanten 39 der Arme 30 an den Enden dieser Schlitze 29 anliegen und dadurch Hülse und Gehäuse relativ zueinander festlegen. Eine relative Verschiebung ist nur unter Verformung des Gehäuses und unter elastischem Aufbiegen desselben zu erreichen.

Verschiebt man das Gehäuse relativ zu der Hülse nach oben, werden die Arme dadurch aufgebogen, daß die obere Kante 39 der Arme am Ende der Schlitze 29 anliegen. Dadurch ist eine Trennung von Gehäuse und Hülse möglich.

Drückt man im Gegenteil das Gehäuse gegen die Hülse, werden die Arme 30 durch das Anliegen der Aufgleitkanten 36 an den unteren Enden der Schlitze 29 ebenfalls aufgebogen, so daß die Innenkanten 37 und die Vorsprünge 38 voneinander entfernt werden. Diese ragen normalerweise nach innen in den Einführbereich 28 hinein und tauchen dabei in der beschriebenen Weise in die Umfangsnut 32 des eingeschobenen Schlauchnippels 21 ein. Biegt man die Arme 30 jedoch in der beschriebenen Weise elastisch auseinander, treten sie aus der Umfangsnut 32 aus, so daß der Schlauchnippel 21 ohne weiteres aus der Hülse 1 herausgezogen werden kann.

Um ein zu weites Aufbiegen der Hülse zu vermeiden, kann diese an der Innenseite der oberen Wand 33 Abstandshalter 40 tragen, die sich beim Andrücken des Gehäuses an die Hülse an die Außenseite der Hülse 1 anlegen. Es ist weiterhin günstig, wenn sich die untere Endfläche der Schlitze 29 in einer verstärkten, ebenso wie die Aufgleitkanten 36 schräg verlaufenden Aufweitfläche 41 fortsetzen, die einstückig an die Hülse 1 angeformt ist. Dadurch wird eine übermäßige Abnützung der kleinen Endflächen der Schlitze 29 vermieden.

Die obere Wand 33 und die Unterseite der Hülse 1 können als Druckflächen ausgebildet sein, so daß Hülse und Gehäuse einfach mit einer Hand gegeneinandergedrückt werden können.

Ebenso wie das Gehäuse können auch die übrigen Teile dieser Kupplung aus Kunststoff hergestellt sein.

Es ergibt sich eine sehr einfache Montage einer solchen Kupplung. Zunächst wird in die Hülse von einer Seite her der von der Schraubenfeder 17 umgebene Ventilkörper 13 eingeschoben, auf den von der anderen Seite her nach dem Einschieben die Ringdichtung 15 aufgebracht wird. Diese Hülse 1 wird anschließend mit dem Gehäuse 31 dadurch verbunden, daß das letztere einfach von oben her auf die Hülse aufgedrückt wird. Dabei weiten sich die Arme 30 soweit auf, bis sie in die Schlitze 29 einrasten. Durch eine Durchstecköffnung 42 in einer das Gehäuse auf der den Armen 30 gegenüberliegenden Seite abschließenden Stirnwand 43 wird der Schlauchnippel 5 in die Einstecköffnung 4 eingeschoben, bis die Rippen 9 in die Umfangsnut 10 einrasten. Der Schlauchnippel 5 kann in an sich bekannter Weise mit einem in der Zeichnung nicht dargestellten Schlauch verbunden sein.

Damit ist die Steckkupplung betriebsbereit. Zur Verbindung mit einem anderen Schlauchende, welches den Schlauchnippel 21 trägt, wird dieser Schlauchnippel 21 in den Einführbereich 28 der Hülse eingeschoben. Dabei verschiebt die Stirnkante 25 des Schlauchnippels 21 in der beschriebenen Weise den Ventilkörper 13 in die Durchgangsstellung, ausserdem gleiten die durch die Schlitze 29 nach innen vorstehenden Arme 30 an der Aufgleitfläche 26 auf, bis sie elastisch in die Umfangsnut 32 einrasten. Der Schlauchnippel 21 ist dann gegenüber der Hülse 1 abgedichtet und axial unverschieblich in der Hülse gehalten.

Zum Lösen dieser Schlauchverbindung genügt es, das Gehäuse 31 gegen die Hülse 1 zu drücken, dadurch werden die Arme so stark aufgeweitet, daß der Schlauchnippel 21 aus der Hülse 1 herausziehbar ist. Gleichzeitig verschiebt sich dadurch der Ventilkörper 13 unter der Wirkung der Schraubenfeder 17 in seine Schließstellung, in welcher die Ringdichtung 15 dichtend an dem als Ventilsitz ausgebildeten Rand 19 anliegt.

## Patentansprüche

1. Schlauchkupplung mit einer Hülse, in die abgedichtet ein Schlauchnippel einschiebbar ist, mit einem an der Hülse senkrecht zu deren Längsachse verschiebbar gehaltenen, U-förmigen, elastisch verformbaren Verriegelungselement, welches mit seinen zwei Armen einen Vorsprung am Schlauchnippel hintergreift und dadurch dessen Herausziehen verhindert, und mit an der Hülse angeordneten Keilflächen, an denen die zwei Arme des Verriegelungselementes anliegen und durch die die beiden Arme bei einer durch Drücken auf deren Verbindungsbereich hervorgernfenen Verschiebung des Verriegelungselementes elastisch soweit voneinander entfernt werden, daß der Schlauchnippel freigegeben wird,
dadurch gekennzeichnet, daß das Verriegelungselement durch ein U-förmiges Gehäuse (31) mit einer oberen Wand (33) und zwei Seitenwänden (34, 35) gebildet ist, welches die Hülse (1) im wesentlichen über deren gesamte Länge umgibt, daß die Arme (30) an die Seitenwände (34, 35) angeformte Vorsprünge sind und daß die obere Wand (33) des Gehäuses (31) als Druckfläche ausgebildet ist.

2. Schlauchkupplung nach Anspruch 1, dadurch gekennzeichnet, daß die Arme (30) des Gehäuses (31) in seitliche Schlitze (29) der Hülse (1) eingreifen und das Gehäuse (31) dadurch an der Hülse (1) in Längsrichtung unverschieblich, dagegen quer dazu verschieblich lagern.

3. Steckkupplung nach Anspruch 2, dadurch gekennzeichnet, daß die Arme (30) soweit elastisch aufbiegbar sind, daß die Arme (30) aus den Schlitzen (29) der Hülse (1) austreten.

4. Steckkupplung nach einem der voranstehenden Ansprüche, dadurch gekennzeichnet, daß die Arme (30) nach innen vorstehende, streifenförmige Wandbereiche sind.

5. Steckkupplung nach einem der voranstehenden Ansprüche, dadurch gekennzeichnet, daß das Gehäuse (31) auf der den Armen (30) abgewandten Seite mittels einer Stirnfläche (43) verschlossen ist, welche koaxial zur Längsachse der Hülse (1) eine Durchstecköffnung (42) für einen Schlauchanschluß (5) aufweist.

6. Steckkupplung nach einem der voranstehenden Ansprüche, dadurch gekennzeichnet, daß in der Hülse (1) ein federbelastetes Rückschlagventil (13) angeordnet ist, das entgegen der Federkraft durch den eingeschobenen Schlauchnippel (21) in Offenstellung verschiebbar ist.

7. Steckkupplung nach einem der voranstehenden Ansprüche, dadurch gekennzeichnet, daß in die Hülse (1) beidseitig abgedichtet Schlauchnippel (5; 21) einschiebbar sind.

8. Steckkupplung nach Anspruch 7, dadurch gekennzeichnet, daß ein Schlauchnippel (21) mittels der elastisch aufbiegbaren Arme (30) des Gehäuses (31), der andere mittels einer elastischen Rast- oder Schnappverbindung (9, 10) in der Hülse (1) in axialer Richtung unverschiebbar festgelegt ist.

9. Steckkupplung nach Anspruch 7, dadurch gekennzeichnet, daß das Gehäuse (31) beidendig aufbiegbare Arme (30) trägt, wobei jeweils ein Armpaar jedem der Schlauchnippel (5; 21) zugeordnet ist.

## Claims

1. A hose coupling, with a sleeve, into which a hose nipple can be inserted in a sealed manner, with a U-shaped, resiliently deformable locking member retained on the sleeve so as to be displaceable at right angles to the longitudinal axis thereof, the said member engaging by means of its two arms behind a projection on the hose nipple and thus preventing its withdrawal, and with wedge surfaces arranged on the sleeve, against which the two arms of the locking member rest and by means of which the two arms, upon displacement of the locking member caused by pressing on the area of connection thereof, are resiliently separated from one another to such an extent that the hose nipple is released, **characterised in that** the locking member is formed by a U-shaped casing (31), with an upper wall (33) and two side walls (34, 35), surrounding the sleeve (1) over substantially its entire length, and the arms (30) are integrally moulded projections on the side walls (34, 35) and the upper wall (33) of the casing (31) is formed as a pressing surface.

2. A hose coupling according to claim 1, **characterised in that** the arms (30) of the casing (31) engage in lateral slits (29) in the sleeve (1) and thus support the casing (31) on the sleeve (1) in such a manner that it is not displaceable longitudinally to the sleeve, but is displaceable laterally thereto.

3. A plug-in coupling according to claim 2, **characterised in that** the arms (30) can be resiliently bent upwards to such an extent that the arms (30) move out of the slits (29) in the sleeve (1).

4. A plug-in coupling according to one of the preceding claims, **characterised in that** the arms (30) are strip-shaped wall areas projecting inwards.

5. A plug-in coupling according to one of the preceding claims, **characterised in that** the casing (31) is sealed by means of a front surface (43) on its side remote from the arms (30) and the said front surface (43) has a through opening (42), coaxial with the longitudinal axis of the sleeve (1), for a hose connection (5).

6. A plug-in coupling according to one of the preceding claims, **characterised** **in that** a spring-loaded check valve (13) is arranged in the sleeve (1) and is displaceable in its open position against the force of the spring by means of the inserted hose nipple (21).

7. A plug-in coupling according to one of the preceding claims, **characterised in that** hose nipples (5, 21) are insertable in the sleeve (1) in such a manner as to be sealed at each end.

8. A plug-in coupling according to claim 7, **characterised in that** one hose nipple (21) is retained in the sleeve (1) by the resiliently upwardly bendable arms (30) on the casing (31), and the other hose nipple is retained in the sleeve (1) by a resilient catch or snap connection (9, 10), so that both hose nipples are not axially displaceable.

9. A plug-in coupling according to claim 7, **characterised in that**, at both ends, the casing (31) supports arms (30) which can be bent upwards, each of the hose nipples (5, 21) being associated with one pair of arms respectively.

## Revendications

1. Raccord pour tuyau flexible, comportant une douille, dans laquelle on peut enficher de façon étanche un embout de tuyau flexible, ainsi qu'un élément de verrouillage en forme de U, élastiquement déformable, qui est tenu sur la douille avec liberté de coulisser perpendiculairement à l'axe longitudinal de cette douille, qui, avec ses deux bras, saisit, par derrière, une saillie prévue sur l'embout de tuyau flexible et, de ce fait, interdit l'extraction de cet embout, et comportant aussi des surfaces obliques qui sont disposées sur la douille, contre lesquelles s'appuient les deux bras de l'élément de verrouillage et au moyen desquelles, si l'on fait coulisser l'élément de verrouillage en appuyant sur sa zone de liaison, les deux bras s'écartent élastiquement l'un de l'autre suffisamment pour que l'embout de tuyau flexible soit libéré,
raccord caractérisé par le fait que l'élément de verrouillage est formé par un manchon en forme de U (31), qui présente une paroi supérieure (33) et deux parois latérales (34, 35), qui entoure la douille (1) sensiblement sur toute sa longueur, que les bras (30) sont des saillies venues de forme sur les parois latérales (34, 35) et que la paroi supérieure (33) du manchon (31) est conçue en tant que surface de pression.

2. Raccord pour tuyau flexible selon la revendication 1, caractérisé par le fait que les bras (30) du manchon (31) viennent en prise dans des fentes latérales (29) de la douille (1) et que de ce fait le manchon (31) porte sur la douille (1) sans liberté de coulisser dans la direction longitudinale mais avec liberté de coulisser perpendiculairement à cette direction.

3. Raccord pour tuyau flexible selon la revendication 2, caractérisé par le fait que les bras (30) peuvent se cintrer élastiquement suffisamment pour que les bras (30) sortent des rainures (29) de la douille (1).

4. Raccord pour tuyau flexible selon l'une des revendications précédentes, caractérisé par le fait que les bras sont des zones de paroi en forme de languette, débordant vers l'intérieur.

5. Raccord pour tuyau flexible selon l'une des revendications précédentes, caractérisé par le fait que, du côté opposé aux bras (30), le manchon (31) est obturé par une surface frontale (43) qui présente, coaxialement à l'axe longitudinal de la douille (1), une ouverture d'enfichage (42) pour un embout de tuyau flexible (5).

6. Raccord enfichable selon l'une des revendications précédentes, caractérisé par le fait que dans la douille (1) est disposé un clapet de non-retour (13) qui est contraint par un ressort et que l'embout de tuyau flexible (21) que l'on y enfiche peut, à l'encontre de la force du ressort, faire coulisser en position d'ouverture.

7. Raccord enfichable selon l'une des revendications précédentes, caractérisé par le fait que l'on peut enficher dans la douille (1), des deux côtés et de façon étanche, des embouts de tuyau flexible (5; 21).

8. Raccord enfichable selon la revendication 7, caractérisé par le fait qu'un embout (21) de tuyau flexible se fixe dans la douille (1), sans liberté de coulisser selon la direction axiale, au moyen des bras (30), pouvant se cintrer élastiquement, du manchon (31), et que l'autre se fixe dans la douille (1), également sans liberté de coulisser selon la direction axiale, au moyen d'une liaison par crantage ou déformation élastique (9,10).

9. Raccord enfichable selon la revendication 7, caractérisé par le fait que le manchon (31) porte aux deux extrémités des bras pouvant se cintrer (30), chaque paire de bras correspondant à chacun des embouts de tuyau flexible (5; 21).
